(19) Europäisches Patentamt / European Patent Office / Office européen des brevets

(11) **EP 3 096 419 A1**

(12) **EUROPEAN PATENT APPLICATION**

(43) Date of publication:
**23.11.2016 Bulletin 2016/47**

(51) Int Cl.:
*H01S 3/00* (2006.01)          *B23K 26/073* (2006.01)
*F21V 8/00* (2006.01)          *G02B 27/09* (2006.01)
*G02B 6/14* (2006.01)

(21) Application number: **16168655.5**

(22) Date of filing: **06.05.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.05.2015 US 201514707085**

(71) Applicant: **Novanta Corporation**
**Bedford, MA 01730 (US)**

(72) Inventor: **BETHEL, Jason W.**
**Mukilteo, WA Washington 98275 (US)**

(74) Representative: **Osha Liang**
**2, rue de la Paix**
**75002 Paris (FR)**

(54) **WAVEGUIDE BEAM CONDITIONING FOR A HIGH POWERED LASER**

(57) A waveguide aperture beam conditioner includes an input port section having an input port that receives an aberrated laser beam, an elongated waveguide body formed from an opaque material and having internal bore formed therethrough, and an output port that receives the waveguided beam and outputs a conditioned output laser beam. An inner surface of the internal bore forms a waveguide for the focused output beam and thereby generates a waveguided beam.

FIG. 2

**Description**

BACKGROUND

Powerful lasers are used for cutting, drilling, welding, marking, engraving of materials, etc. In particular, radio frequency (RF)-excited gas lasers produce laser energy when a gas medium within the laser is excited by the application of RF energy between a pair of electrodes. An example of a gas laser is a carbon dioxide ($CO_2$) laser.

The performance parameters of a laser, particularly an RF-excited gas laser, may generally be characterized by the laser power, power stability, and beam mode quality. Each of these performance parameters may be affected by one or more conditions within the laser itself. For instance, changing conditions of the gas within the electrodes of an RF-excited gas laser may affect the uniformity of the gas discharge within the electrodes. This then affects the $M^2$ (pronounced "M-squared") parameter, which is defined as the ratio of a beam parameter product (BPP) of an actual beam to that of an ideal Gaussian beam at the same wavelength (*e.g.,* a "beam quality factor"). *See, e.g.,* The Physics and Technology of Laser Resonators, Jackson and Hall eds. Other performance metrics include ellipticity (or asymmetry) and astigmatism. *See* standards ISo11145, ISO11146-1, and ISO11146-2.

The $M^2$ factor performance metric characterizes how well, *i.e.,* how tightly, a laser beam can be focused. A "perfect" beam, *i.e.,* a beam with diffraction limited performance, is defined by $M^2 = 1.0$. The term "diffraction limited" refers to a beam whose optical properties are limited only by the unavoidable physical phenomena of diffraction-*i.e.*, the beam does not possesses any of the common aberrations that may negatively affect the properties of optical beams, such as, spherical aberration, coma, etc. The presence of these common aberrations (which may, *e.g.,* be induced by the lenses and mirrors of the optical system) will put a lower limit on focused the spot size that that is larger than the diffraction limited spot size. On the other hand, a diffraction limited optical beam can be focused to the smallest theoretical spot size for a given size and wavelength of beam.

The ellipticity of a laser beam is defined as the ratio of spot widths along the major and minor axes of the beam at a particular location along the beam. The astigmatism of a laser beam is defined as the difference in the beam waist locations (locations of smallest spot size) of a laser beam. In other words, if one envisions travelling along an astigmatic beam, one may first see the beam size reach a minimum in the x-direction (with the y-direction still unfocussed) and then, travelling still further, the x-direction will expand while the beam size in the y-direction reaches a minimum. The distance along the beam between the x- and y- positions of minimum beam size characterizes the astigmatism of the beam. If there is ellipticity and/or astigmatism in a laser beam the symmetry of the beam will vary along the beam path.

For laser beams with elliptical and/or astigmatic outputs, the performance of the laser beam when used in materials processing applications will be detrimentally affected because the size and/or shape of the focused laser beam on the material being processed will be sub-optimal, *e.g.*, the laser spot on the processed material may be larger than desired. Even a laser having perfect beam quality, *i.e.,* $M^2 = 1.0$, will produce poor results if the beam is elliptical when focused onto the part being processed. This is because optimal processing requires the highest possible optical power density to be incident on the surface of the part being processed. In an elliptical and/or astigmatic beam, the focused beam power density will be reduced from its theoretical maximum that would result from a perfectly circular beam.

In some cases, an elliptical beam may be corrected by the use of one or more cylindrical lenses on the output of the laser, but this may exacerbate the astigmatism of the beam. In addition, ellipticity may not be controlled consistently from laser tube to laser tube because the alignment and/or production build tolerances of the output of each laser may be slightly different. Accordingly, different focal length lenses may be required for each build. Even for the case of a single laser that may operate at different input powers and operating frequencies, changes inevitably occur in the output laser mode thereby requiring different beam conditioning arrangements to be used for each laser operating condition.

SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

Illustrative embodiments of the present disclosure are directed to a laser that includes a first electrode and a second electrode separated by a gap region having a gap thickness between a first electrode inner surface and the second electrode inner surface. A discharge region is disposed within a central portion of the gap region with a lasing medium disposed within the discharge region. The discharge region is further disposed within an optical cavity. The laser further includes an output port for allowing an output beam of the laser to exit the optical cavity. The waveguide aperture includes an input port section having the input port that receives the output beam, an elongated waveguide body having internal bore formed therethrough and an output port that receives the waveguided beam and outputs a conditioned output beam of the laser. The transverse width of the internal bore has a transverse size that is small enough to cause the output beam to be waveguided by the internal bore.

Illustrative embodiments of the present disclosure are directed to a beam conditioning apparatus for conditioning an output beam of a laser. The beam conditioning apparatus includes an optical coupling element that couples the output beam of the laser into an input port of a waveguide aperture. The waveguide aperture includes an input port section comprising the input port that receives the focused output beam, an elongated waveguide body formed from an opaque material and having internal bore formed therethrough, and an output port that receives the waveguided beam and outputs a conditioned output beam of the laser. An inner surface of the internal bore forms a waveguide for the focused output beam and thereby generates a waveguided beam.

Illustrative embodiments of the present disclosure are directed to a waveguide aperture beam conditioner. The waveguide aperture beam conditioner comprises an input port section comprising a input port that receives an aberrated laser beam, an elongated waveguide body formed from an opaque material and having internal bore formed therethrough, and an output port that receives the waveguided beam and outputs a conditioned output laser beam. The inner surface of the internal bore forms a waveguide for the focused output beam and thereby generates a waveguided beam.

Illustrative embodiments of the present disclosure are directed to a method for conditioning an output beam of a laser. The method includes coupling the output beam of the laser into an input port of a waveguide aperture, waveguiding, by an inner surface of the internal bore, the focused output beam thereby generating a waveguided beam, and outputting, by an output port, the waveguided beam thereby generating a conditioned output beam of the laser. The waveguide aperture includes an input port section comprising the input port that receives the focused output beam and an elongated waveguide body formed from an opaque material and having internal bore formed therethrough.

Other aspects of the invention will be apparent from the following description and the appended claims.

BRIEF DESCRIPTION OF DRAWINGS

FIG. 1 shows a waveguide conditioned laser system in accordance with one or more embodiments;

FIG. 2 shows a laser beam conditioning system in accordance with one or more embodiments of the invention;

FIGs. 3A-3D show cross-sections of waveguide apertures for laser beam conditioning in accordance with one or more embodiments of the invention.

FIG. 4 shows a waveguide apertures for laser beam conditioning in accordance with one or more embodiments of the invention.

FIGs. 5A-5C show cross-sections of waveguide apertures for laser beam conditioning in accordance with one or more embodiments of the invention.

FIG. 6A shows a perspective view of a laser in accordance with one or more embodiments of the invention;

FIG. 6B shows a top view of an unstable laser resonator in accordance with one or more embodiments of the invention;

FIG. 7 shows a cross-section of a laser resonator in accordance with one or more embodiments of the invention.

FIG. 8 shows a plot of optical loss versus diameter of the inner bore of a waveguide aperture in accordance with one or more embodiments of the invention.

FIG. 9 shows a plot of optical loss versus overall length of a waveguide aperture in accordance with one or more embodiments of the invention.

FIG. 10 shows a flow chart for a method for waveguide conditioning of a high powered laser in accordance with one or more embodiments.

DETAILED DESCRIPTION

Specific embodiments of waveguide conditioning for a high powered laser will now be described in detail with reference to the accompanying figures. Like elements in the various figures (also referred to as FIGs.) are denoted by like reference numerals for consistency.

In the following detailed description of embodiments, numerous specific details are set forth in order to provide a more thorough understanding of the laser tube with baffles. However, it will be apparent to one of ordinary skill in the art that these embodiments may be practiced without these specific details. In other instances, well-known features have not been described in detail to avoid unnecessarily complicating the description.

In general, one or more embodiments of the present disclosure are directed to a waveguide aperture beam conditioner and a laser system and method for reducing or eliminating both ellipticity, astigmatism and improving beam quality in a laser using the waveguide aperture beam conditioner. The disclosed examples refer particularly to hybrid waveguide unstable $CO_2$ resonators but could in general be applied to any asymmetric laser beam without departing from the scope of the present disclosure.

In accordance with one or more embodiments, the high powered laser may be a Radio Frequency (RF)-excited gas discharge laser (*e.g.,* a slab laser). The laser includes a housing containing a laser gas, where a pair of elongated, planar electrodes are disposed within the housing and spaced apart to define a narrow gap corresponding to a discharge region. A laser resonator is defined by placing mirrors at the ends of the electrodes. The electrodes may form a waveguide, or light guide, in one axis of the resonator and confine the lasing mode of the resonator in an axis perpendicular to the plane of the electrodes (the waveguide axis). The mirrors define the lasing mode in an axis parallel to the plane of the electrodes. This type of mirror arrangement operates in the long axis of the slab discharge region as what is referred to as an unstable resonator (or unstable resonant cavity).

In accordance with one or more embodiments, the laser may be operated in a pulsed mode, particularly for drilling, cutting, etc. The pulse-repetition frequency (PRF) and the pulse duty-cycle may be selected according to the operation to be performed and according to the material on which the operation will be performed (e.g., PRF may typically range from less than 1 kilohertz (kHz) to over 100 kHz). As noted above, laser performance (e.g., output beam shape, pointing stability, discharge stability, etc.) can be affected at certain frequencies due to acoustic resonances, which may be caused by, among other things, perturbations in the gas discharge volume due to localized pressure variations in the gas.

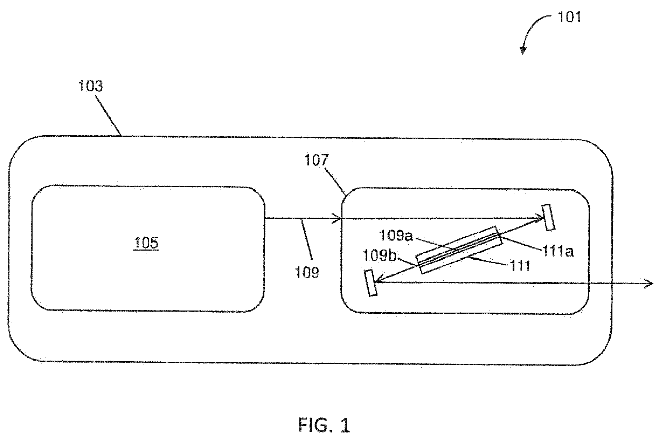

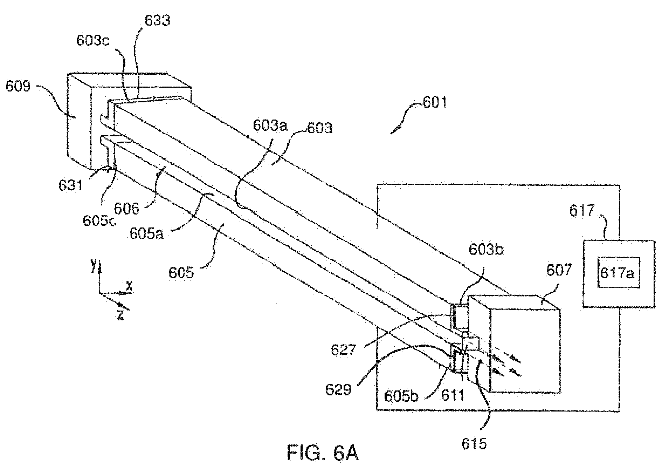

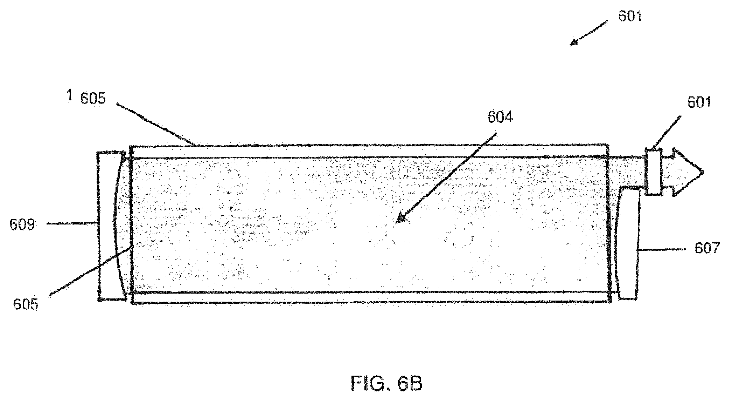

FIG. 1 shows a waveguide conditioned laser system 101 in accordance with one or more embodiments. The laser system includes external housing 103 within which is located laser source 105 and beam conditioning system 107. As described above, in many high power laser applications, the output beam 109 of the laser source 105 may suffer from both unwanted ellipticity and astigmatism. In accordance with one or more embodiments of the invention, the beam quality and beam stability may be improved by passing the output beam 109 through a beam conditioning system 107, as shown in FIG. 1. More specifically, the laser beam to be conditioned is generated within a laser cavity (not shown) and output beam 109 is directed toward the input end of beam conditioning system 107. In accordance with one or more embodiments, the output laser beam 109 may be the output laser beam produced by any type of laser source 105, *e.g.,* a beam produced by and of the lasers described below in reference to FIGs. 6-7.

After entering beam conditioning system 107, the elliptical/astigmatic output beam 109 is coupled into waveguide aperture 111. In accordance with one or more embodiments, the coupling may be accomplished using any appropriate optical coupling system, e.g., by using a focusing element 113 (shows as a mirror, but may also be implemented as a lens) to focus the output beam 109 to the appropriate size for coupling into the hollow central waveguiding region of inner bore 111a of waveguide aperture 111, shown here in cross-section. Furthermore, in accordance with one or more embodiments, the input end of the inner bore 111a may be appropriately shaped so as to allow the direct coupling of the elliptical/astigmatic output beam 109 without the need for and additional coupling optics.

In accordance with one or more embodiments, the waveguide aperture 111 is long enough so that the focused beam 109 becomes guided by the walls of the inner bore 111a of the waveguide aperture 111. The waveguiding of the beam 109 thus forces the properties of the guided beam to be determined by the waveguide rather than the incoming laser beam 109 (which, as described above, may be slightly elliptical or astigmatic). In accordance with one or more embodiments, the length of the waveguide aperture 111 that will cause waveguiding of the beam 109, and thereby created a waveguided beam 109a, depends on the wavelength of the beam. In general, the length L of the waveguide aperture is large enough to cause the Fresnel Number $NF$ of the waveguide to be less than approximately 1, or L is chosen such that $NF <$ approximately 1, where $NF = a^2/L\lambda$.

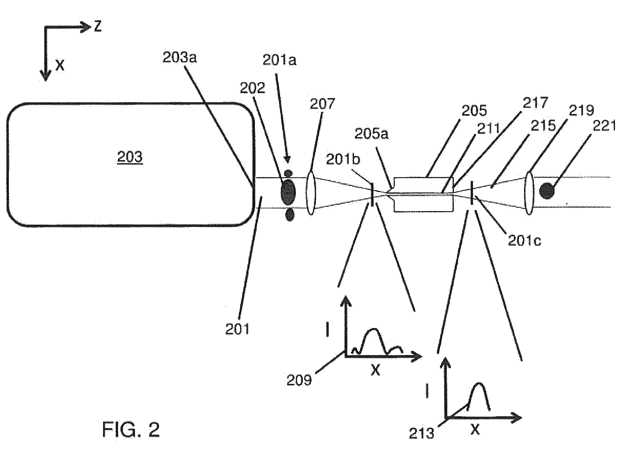

As it exits the output port of the waveguide aperture 111, the now diverging conditioned output beam 109b may be incident onto collimating optical element 115 (shows as a mirror, but may also be implemented as a lens) what serves to collimate the now conditioned output beam 109b. Because the laser beam 109 was guided by the inner bore 111a of waveguide aperture 111, the shape of the conditioned output beam 109b at the exit of the aperture, e.g., as illustrated by intensity distribution 213 and cross section 221 shown in FIG. 2 below, will generally match the cross-sectional shape of the inner bore 111a. Furthermore, the radius of curvature of the phase front across the whole cross-section of the conditioned output beam 109a at the output of the waveguide aperture 111 will also be determined by the properties of the waveguide and hence will be close to infinity, *i.e.,* a flat, unaberrated phase front. Thus, the action of the beam conditioning system 107 is to take an elliptical, astigmatic or generally aberrated output beam 109 and to generate a conditioned output beam 109b that is generally unaberrated and having a cross section that is defined by the cross-section of the inner bore 111a of waveguide aperture 111, e.g., circular or any other suitable shape.

FIG. 2 shows another example of a system for waveguide conditioning a high-power laser beam in accordance with one or more embodiments, with additional description related to the shapes of the input and output beams and the beam conditioning effect of the waveguide aperture. The illustrative embodiment shown in FIG. 2 also employs a pair of lenses as the optical coupling system, one for coupling the beam into the waveguide aperture and one for coupling out of the waveguide. However, the description below with respect to the beam conditioning effect of the waveguide aperture applies equally well to the illustrative embodiment shown in FIG. 1 that employed a pair of mirrors as the optical coupling system.

As described above, in accordance with one or more embodiments of the invention, the beam quality may be improved by passing the output beam 201 through a waveguide aperture 205 as shown in FIG. 2. In this illustrative embodiment, the output laser beam 201, which may be the output laser beam produced by any type of laser 203, *e.g.,* a beam produced by and of the lasers described below in reference to FIGs. 6-7. Cross section 201 a of beam 201 shows that the beam 201 may not only be elliptical in shape, but also may have one or more side lobes, *i.e.,* some of the laser power may be distributed in spatial regions of the beam that are adjacent to the central lobe 202 of the laser spot. To efficiently couple the beam 201 into the waveguide aperture 205, a focusing lens system 207 may disposed between the output port 203a of the laser 203 and the input port 205a of the waveguide aperture 205. In accordance with one or more embodiments, the input port 205a may be placed near the focal plane of focusing system 207 such that the output beam 201 is focused onto the input port 205a for maximum coupling of the output beam into the waveguide aperture 205. While the focusing system 207 is represented by a single convex lens in FIG. 2, any type and any number of focusing optics may be used without departing from the scope of the present disclosure. Furthermore, one or more embodiments may do away with the need for any coupling optics such as focusing system 207. For example, the raw output beam 201 may be coupled directly into the waveguide aperture 205.

In accordance with one or more embodiments, the size of the focused beam relative to the size of the waveguide aperture falls within a range of about $0.4a < \omega < 0.7a$ where a is the half width of the inner bore 211 of the waveguide aperture 205 and co is the beam waist at the focal plane of the focusing system 207. As shown by the intensity distribution 209, the cross section 201b of the focused output beam 201 may have side lobes in a manner similar to the original output beam 201 and thus, the beam waist co may refer to the size of the central lobe only, excluding the side lobes.

As already described above in reference to FIG. 1, because the laser beam is guided by the inner bore 211 of waveguide aperture 205, the shape of the laser beam spot at the exit of the aperture, e.g., as illustrated by intensity distribution 213 and cross section 221, will generally match the shape of the waveguide. For example, the inner bore 211 of waveguide aperture 205 shown in FIG. 2 is formed having a circular cross-section and thus the cross section 221 of the output beam is also circular. Furthermore, the radius of curvature of the phase front the laser beam across the whole cross-section at the output of the waveguide will also be determined by the properties of the waveguide and hence will be close to infinity, *i.e.,* a flat, unaberrated phase front. Accordingly, passing the laser beam through the waveguide aperture 205 has the effect of conditioning the laser beam by removing both the astigmatism and ellipticity of the beam. As a result of the conditioning of the beam, it may be focused to a smaller spot in both axes, as compared to a traditional beam conditioning system.

In accordance with one or more embodiments, the central bore 211 of waveguide aperture 205 may function as a multi-mode waveguide. For example, in accordance with one or more embodiments the EH11 and EH22 modes of the waveguide may be excited. However, as the EH11 and EH22 modes propagate down the length of the guide, the intensity profiles of the guided beam alternate between being "donut" shaped (when the EH11 and EH22 modes are 180 degrees out of phase) and Gaussian shaped (when the EH11 and EH22 modes are in phase). Accordingly, the length of the waveguide aperture is such that the EH11 and the EH22 modes for this diameter of aperture are in-phase at the output port, thereby insuring that the output mode is nearly Gaussian. For example, for a wavelength of 10.6 microns, a waveguide aperture having a circular bore diameter of 0.040 inches and a length of 3.0 inches will result in nearly Gaussian output.

As shown in FIG. 2, the conditioned beam 215 will quickly diverge as it is output from the output port 217 of the waveguide aperture 205. Thus, in accordance with one or more embodiments, a collimating optical system 219 may be employed, represented in FIG. 2 by a single collimating lens. One of ordinary skill having the benefit of this disclosure will recognize that any suitable collimating optical system that includes one or more optical elements may be used without departing from the scope of the present disclosure.

In accordance with one or more embodiments, the appropriate length for the waveguide aperture may be determined experimentally, by measuring the output mode shape for a number of different lengths and then choosing a length that produces the most Gaussian output mode, or other shapes such as donut or quasi flat-topped beam shapes by judiciously coupling/combining lower and higher order modes. In addition, the waveguiding behavior of the waveguide aperture may be modelled and the appropriate length determined from the numerical output of the model. For example, the complex amplitude of the $EH_{1n}$ mode of a guide having a hollow circular aperture may be given by

$$\mathrm{EH}_{1n}(r,z) = J_0\left(u_{1n}\frac{r}{a}\right)e^{i\gamma_{1n}z} \qquad (1)$$

where Jo is the zero order Bessel Function of the first kind, $u_{1n}$ is the nth root of the Bessel function, given by the equation $J_0(u_{n1}) = 0$ , $\gamma_{1n}$ is the complex propagation constant of the $EH_{1n}$ mode, and $a$ is the radius of the hollow circular core. The complex propagation constant is related to the phase coefficient $\beta_{1n}$ of the $EH_{1n}$ mode and the attenuation coefficient $\alpha_{1n}$ of the $EH_{1n}$ mode by way of the relation

$$\gamma_{1n} = \beta_{1n} + i\alpha_{1n} \qquad (2)$$

The phase coefficient $\beta_{1n}$ is further expressed by

$$\beta_{1n} = \frac{2\pi}{\lambda}\left\{1 - \frac{1}{2}\left(\frac{u_{1n}\lambda}{2a}\right)^2\left[1 + \mathrm{Im}\left(\frac{v\lambda}{\pi a}\right)\right]\right\} \qquad (3)$$

where $\lambda$ is the wavelength, $a$ is the guide radius, and v is related to the complex refractive index of the guide wall. Accordingly, under the condition that the $EH_{11}$ and $EH_{12}$ modes are excited with complex amplitudes $A_{11}$ and $A_{12}$, the resulting field intensity from these two modes as a function of the position along the guide (*i.e.*, along the z-direction) of the guide may be expressed as

$$I(r,z) = \left[A_{11}J_0\left(u_{11}\frac{r}{a}\right)e^{-\alpha_{11}z}\right]^2 + \left[A_{12}J_0\left(u_{12}\frac{r}{a}\right)e^{-\alpha_{12}z}\right]^2 +$$

$$2A_{11}A_{12}J_0\left(u_{11}\frac{r}{a}\right)J_0\left(u_{12}\frac{r}{a}\right)\left(e^{-(\alpha_{11}+\alpha_{12})z}\cos((\beta_{11} - \beta_{12})z)\right) \qquad (4)$$

Thus, under the assumptions given above, the optical intensity *I(r,z)* of the guided beam at every point *z* along the length of the guide may be computed. Of course, the above "closed form" equations are provided herein merely as an example and other models may be employed, including those that account for more than two propagating modes. Likewise, any physics-based numerical modelling solution available through commercial software packages may be employed without departing from the scope of the present disclosure.

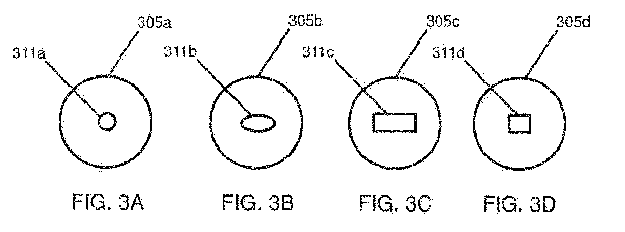

FIGs. 3A-3D show examples of waveguide apertures having a number of different cross sectional shapes for the central bore in accordance with one or more embodiments of the invention. FIG. 3A shows a cross section of a waveguide aperture 305a having a circular bore 311a. FIG. 3B shows a cross section of a waveguide aperture 305b having an elliptically shaped bore 311b. FIG. 3C shows a cross section of a waveguide aperture 305c having a rectangular bore 311c. Finally, FIG. 3A shows a cross section of a waveguide aperture 305d having a square bore 311d. The above cross sectional shapes are shown here merely for the sake of example and any cross sectional shape may be used without departing from the scope of the present disclosure. Furthermore, each example shown in FIGs 3A-3D are shown with a square outer shape but any shape may be used without departing from the scope of the present disclosure.

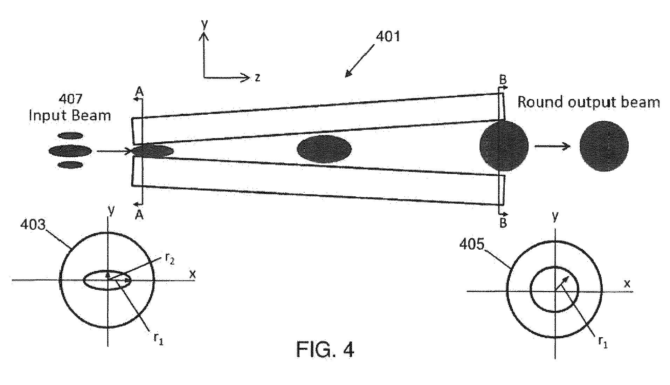

FIG. 4 shows a waveguide aperture having a tapered central bore in accordance with one or more embodiments. To allow for further control over the conditioning effect of the waveguide aperture, one or more embodiments, employ a central bore having a shape and/or size that gradually changes along the length of the waveguide aperture. For example, as shown in FIG. 4, the tapered waveguide aperture 401 has an input cross-section 403 (taken along line A-A) having a shape and size that is different from the output cross-section 405 (taken along line B-B) shape and size. More specifically, the input cross-section is elliptical, generally having dimensions that match the dimensions of a cross-section of the input beam 407. In this illustrative embodiment, the shape/size of the waveguide is tapered such that in one axis (x-axis) the size of the cross-section is relatively constant, while in another axis (y-axis), the size of the bore gradually increases. Accordingly, this example may, at the input, take a beam 407 having a radii of $r_1$ and $r_2$, where $r_1$ is initially greater than $r_2$ and, at the output, output a circular beam having a single radius of $r_1$. In accordance with one or more embodiments, any input and any output size shape may be used without departing from the scope of the present disclosure. For example, a rectangular input bore may taper into a square or circular output bore.

In accordance with one or more embodiments, the shape of the central bore at the output of the waveguide aperture may have an extreme aspect ratio such that, when used in combination with an appropriately chosen focusing lens, a line focus output beam may be created. Employing a waveguide aperture having this type of architecture allows for the creation of a highly elongated output beam from a nearly symmetrical input beam without the additional spherical aberration the would result from the use of only cylindrical lenses for the beam shaping. Thus, in embodiments such as this, the function of the waveguide aperture may be to create a highly elongated beam from a less elongated, or even spherical beam. For example, in one or more embodiments, the range of aspect ratios could be from 5:1 to 20:1. Those skilled in the art will appreciate that one or more embodiments are not limited to those values. Also, those skilled in the art will appreciate that for aspect ratios over around 10:1, it is difficult to attain using standard lenses and mirrors without introducing spherical aberrations.

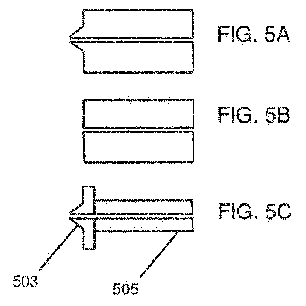

In accordance with one or more embodiments, the waveguide aperture may be formed from one, or more than one, section. For example, FIGs. 5A-5B show examples of a waveguide aperture that is a single section. The single section waveguide apertures shown may be formed from any number of different types of generally opaque materials (*i.e.*, materials that are nontransparent at the operating wavelength), *e.g.*, metals such as copper, aluminum, brass, etc., or a non-metal ceramics such as, $Al_2O_3$, BeO.

In accordance with one or more embodiments, the waveguide aperture may be made of more than one section, *e.g.*, as shown in FIG. 5C, where the difference sections may be made of similar or different materials. For example, the embodiment shown in FIG. 5C may employs a metallic front aperture portion 503 that abuts a front surface 505a of a rear ceramic portion 505.

In the case of low power laser beams the waveguide aperture may be made of copper or aluminum and the high loss nature of these metals can add to further improve the beam quality of the laser by increasing the losses of any higher order mode components, compared to the fundamental mode, that may enter the waveguide without being filtered off by the aperture. For high power lasers, the losses of the main mode will be high enough that cooling of the waveguide aperture may be required.

In accordance with one or more embodiments, a waveguide aperture made of $Al_2O_3$ or BeO may have lower loss than copper or aluminum for the linearly polarized mode typically produced by a $CO_2$ hybrid unstable-waveguide or hybrid unstable-free space type resonator. In other embodiments, a composite waveguide aperture, like that shown in FIG. 5C may have a front input port section 503 of highly reflective and conductive material such as copper and a waveguide section 505 formed from low loss ceramic material. Such an embodiment allows a high power laser beam to be effectively apertured by the conductive metallic section and waveguided by the low loss section of ceramic waveguide to reduce losses and keep thermal effects down.

FIG. 6A shows an example of a high power laser employing a laser resonator (also referred to herein as a laser cavity) that results in an elliptical and/or astigmatic output beam, in accordance with one or more embodiments. As described in more detail above in reference to FIGs. 1-5, the output beam 615 may be sent through a waveguide aperture for processing, *i.e.*, for improving the quality of the beam. FIG. 6A shows one example of laser employing a laser resonator, *e.g.*, a slab gas laser 601, but the waveguide aperture may be used to process any type of laser beam without departing from the scope of the present disclosure. Furthermore, while the examples described herein may show resonator designs of a certain type, a resonator of any design may be used without departing from the scope of the present disclosure, *e.g.*, a stable resonator, an unstable resonator, etc. In the illustrative embodiment shown in FIG. 6A, the slab gas laser 601 includes a pair of rectangular planar electrodes 603 and 605 (*e.g.*, opposing "hot" electrode and "ground" electrode) separated by a small transverse inter-electrode gap 606 (*e.g.*, having a thickness between 1 mm and 5 mm). Electrodes 603 and 605 may be made from aluminum, though other materials may be used.

In accordance with one or more embodiments, the inter-electrode gap 606 is at least partially filled with a laser gain medium (not shown). Furthermore, in embodiments that employ a gas discharge as the laser gain medium, the inter-electrode gap 606 may also serves as a gas discharge region. In accordance with one or more embodiments, the discharge region is defined to be the space between the inner surfaces 603a and 605a of the elongated electrodes 603 and 605, respectively. In accordance with one or more embodiments, the inner surfaces 603a and 605a serve as two elongated resonator walls that bound the discharge region in a transverse direction, and, in some embodiments, may also serve as waveguiding surfaces for the intra-cavity laser beam in this transverse direction (y-direction). While the example shown in FIG. 6A is a slab laser that employs planar electrodes 603 and 605, any electrode shape is possible without departing from the scope of the present disclosure. For example, U.S. Patent No. 6,603,794, incorporated by reference herein in its entirety, discloses a number of different electrode arrangements, e.g., contoured electrodes, tapered electrodes, and/or annular electrodes may be used.

The slab laser 601 shown in FIG. 6A further includes an optical resonator that is formed between the output coupling mirror 611 and front cavity mirror 607, with the folding mirror 609 used to fold the cavity as shown. In accordance with one or more embodiments, a pair of spherical and/or cylindrical mirrors may be used for the front cavity mirror 607 and folding mirror 609, respectively, and in general a transmitting window may be used for the output coupling mirror 611. However, other embodiments may use spherical optics, cylindrical optics, toroidal optics, or generally aspherical optics, or any combinations thereof for the resonator without departing from the scope of the present disclosure. In addition, in accordance with one or more embodiments, the optics may be mounted to end flanges (not shown) that maintain vacuum integrity while at the same time providing suitable adjustment of the mirror tilt to enable optimum alignment of the constituent mirrors of the optical resonator. In accordance with one or more embodiments, the entire slab laser assembly may be placed within a housing (not shown).

In accordance with one or more embodiments, the electrodes 603 and 605 may have lengths of up to 1 meter, widths of up to 0.5 meters, and inter-electrode gaps on the order of 0.5-6.0 mm. However, other embodiments may use dimensions outside this range without departing from the scope of the present disclosure. In accordance with one or more embodiments, when radio frequency (commonly referred to as "RF") power is applied to the gas lasing medium via elongated electrodes 603 and 605, a gas discharge forms within the inter-electrode gap 606. The laser energy then builds up within one or more modes, including a fundamental mode, of the optical resonator, eventually forming an intra-cavity laser beam (not shown) that travels back and forth between the output coupling mirror 611 and front cavity mirror 607 via rear folding mirror 609. Some fraction of the intra-cavity laser beam is transmitted through the output coupling mirror 611 and forms output laser beam 615.

In the illustrative embodiment shown in FIG. 6A, the electrical resonator cavity, and consequently the gas discharge area, may be rectangular shaped. However, alternative embodiments may employ a square, annular, or other electrical resonator cavities. The resonator surfaces 603a and 605a may be bare electrode surfaces or may also be plated electrode surfaces. Suitable materials for bare embodiments include metals such as aluminum and other metallic alloys. Plated embodiments may employ a ceramic material, such as alumina or beryllia, on the electrode surfaces.

As alluded to above, in accordance with one or more embodiments, the inter-electrode gap region (or inner cavity region) may be filled with a gas lasing medium. For example, the gas lasing medium may be a mixture of one part carbon dioxide ($CO_2$), one part nitrogen ($N_2$), and three parts helium (He), with the addition of 5% xenon (Xe). The gas pressure may be maintained in a range of approximately 30-150 Torr, *e.g.,* 90 Torr. However, other embodiments may use higher pressures without departing from the scope of the present disclosure. Other embodiments of the invention may use other types of gas lasers, examples of which are listed in Table 1.

| TABLE 1 | |
| --- | --- |
| Type of Laser | Gas Lasing Medium |
| Carbon Dioxide | Some mixture of He, $N_2$, $CO_2$ and other gases such as Xe, $O_2$, and $H_2$. |
| Carbon Monoxide | Some mixture of He, $N_2$, CO, and other gases such as Xe, $CO_2$, $O_2$, and $H_2$. |
| Helium Cadmium | Some mixture of including He: Cd, including other inert gases |
| HeNe Lasers | Some mixture of He, Ne, including other inert gases |
| Krypton Ion Lasers | Some mixture of Kr, He, including other inert gases |
| Argon Ion Lasers | Some mixture of Ar, He, including other inert gases |
| Xenon | Xe, including other inert gases |
| Argon Xenon Lasers | Some mixture of Ar, Xe, He |
| Copper Vapor Laser | He/Ne + copper vapor (metal at high temp) + traces of other gases including $H_2$ |
| Barium Vapor Laser | He/Ne + Barium vapor |
| Strontium Vapor Laser | He/Ne + Strontium vapor |
| Metal Vapor Laser | Almost any metal vapor will lase given the right mixture of gases, temperature, and excitation conditions |
| Metal Halide Vapor Lasers | Almost all the above metals will also lase in their respective halide compounds, at lower temperatures, under slightly different excitation conditions |
| Excimer lasers | XeCl, XeF, ArF |
| Chemical lasers | HF, DF |
| Atmospheric lasers | Atmospheric gas |
| Nitrogen lasers | $N_2$, plus others |
| Sulphur, Silicon | Vapors of these elements |
| Iodine, Bromine, Chlorine | Vapors of these elements |
| COIL | Chemical Oxygen Iodine Laser |

Other gas mixtures may be used as well. For instance, some embodiments may use the following gas mixtures, or their isotopes, including portions of neon (Ne), carbon monoxide (CO), hydrogen ($H_2$), water ($H_2O$), krypton (Kr), argon (Ar), fluorine (F), deuterium, or oxygen ($O_2$) and other gases, examples of which are listed in Table 1 above, at various other gas pressures, *e.g.,* 30-120 Torr, *e.g.,* 50 Torr; however, it will be appreciated that other gaseous lasing media may also be employed. For instance, one example of a lasing medium includes one or more of the following vapors: copper, gold, strontium, barium, a halide compound of copper, a halide compound of gold, a halide compound of strontium, a halide compound of barium, and other vapors, examples of which are identified but not limited to those shown in Table 1 above.

Returning to FIG. 6A, in accordance with one or more embodiments, the slab laser 601 includes a power supply 617 that supplies excitation energy to the gas lasing medium located within gap 606 via the first and second elongated electrodes 603 and 605, respectively. Accordingly, the addition of excitation energy causes the gas lasing medium to emit electromagnetic radiation in the form of laser beam 615 that ultimately exits the optical resonator by way of output coupling window or optical element 611. Included with the power supply 617 is a radio frequency generator 617a that generates the excitation energy to be applied to the first and second elongated planar electrodes 603 and 605. In accordance with one or more embodiments, the radio frequency generator may operate at a frequency of 40 MHz with an output power level of at least 3000 W. Other embodiments may use other excitation frequencies and power levels without departing from the scope of the present disclosure. Furthermore, in accordance with one or more embodiments, the radio frequency generator may be connected to the electrodes in a bi-phase fashion such that the phase of the voltage on one of the first and second elongated planar electrodes 603 and 605 is shifted substantially 180 degrees relative to the voltage on the other of the first and second elongated planar electrodes 603 and 605. The bi-phase excitation may be accomplished by any technique known in the art, *e.g.,* by the placement of inductors between the first and second electrodes, both of which are isolated from ground. In accordance with one or more alternative embodiments, the radio frequency generator may be connected to one of the first and second elongated planar electrodes, such that only one of the first and second elongated planar electrodes is excited and the other is electrically grounded.

The excitation energy supplied by the power supply 617 in the embodiment shown in FIG. 6A may be radio frequency energy, but may also be associated with microwave, pulsed, continuous wave, direct current, or any other energy source that may suitably stimulate a lasing medium into producing laser energy.

In accordance with one or more embodiments, the inner surfaces 603a and 605a of the first and second elongated planar electrodes 603 and 605, respectively, are positioned sufficiently close to each other so that the inter-electrode gap acts as a waveguide along the y-axis for the laser radiation. Accordingly, when acting as waveguide surfaces, the inner surfaces 603a and 605a also act as optical resonator surfaces in the transverse direction (y-direction). In accordance with one or more embodiments, waveguiding occurs when $\pi N \ll 1$, where $N = D^2/(4\lambda L)$ is the Fresnel number of the guide and D is the width of the gap between the electrodes, L is the length of the optical cavity, and $\lambda$ is the wavelength of the laser radiation. For a wavelength of about 10.6 microns, which is a common wavelength produced by a $CO_2$ laser, the waveguiding criterion is satisfied if the inter-electrode gap is less than 2 mm for a guide length of 40 cm. However, in other embodiments, the inter-electrode gap is large enough to allow for free space propagation, e.g., Gaussian beam propagation, of the laser beam in the y-direction. Accordingly, in this free space configuration, these surfaces serve to define the thickness of the gas discharge region without acting as a waveguide for the laser radiation. Other embodiments may use an inter-electrode gap that is between the waveguiding criterion and complete free space propagation.

FIG. 6B shows a top view of an unstable slab laser resonator 601 that may be used as the optical resonator discussed above in reference to FIG. 6A. As before, the resonator includes two elongated planar electrodes, only one of which, electrode 605, is shown in FIG. 6B. In the unstable slab resonator 601, an intra-cavity laser beam 604 (depicted by the shaded area in FIG. 6B) passes multiple times through a lasing medium (not shown, but as described above, may be, *e.g.,* a $CO_2$ gas) and generally may fill a majority of the discharge region. In accordance with one or more embodiments, the resonator mirrors 609, 607 form the unstable resonator and the resonator further includes an output window 611. In the illustrative embodiment shown in FIG. 6B, the resonator mirror 609 is concave and the resonator mirror 607 is convex. Furthermore, the resonator mirror 607 is smaller than the resonator mirror 609 (in the direction transverse to the long axis of the resonator resonator) so as to allow laser radiation to escape by way of output window 611. One of ordinary skill having the benefit of this disclosure will appreciate that any unstable resonator geometry may be employed without departing from the scope of the present disclosure, and thus, the resonator described here is merely one example.

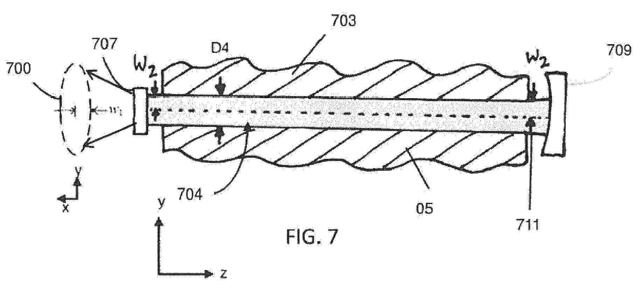

FIG. 7 shows a cross-sectional view of a hybrid slab resonator, cut in the y-z plane relative to the perspective view shown in FIG. 6A, in accordance with one or more embodiments. The gap 704 between the two resonator walls 703 and 705 has a width D4 and contains a lasing medium, *e.g.,* a gas discharge medium or a solid state gain medium. In accordance with one or more embodiments, an optical resonator may be formed between at least two mirrors that are spaced apart from one another in the longitudinal direction (the z-direction), *e.g.,* mirrors 707 and 709, in FIG. 7. Alternatively, mirror 709 may be an output window, similar to output window 611 shown in FIG. 6B. In accordance with one or more embodiments, the intra-cavity laser beam 711 may traverse the lasing medium one or more times.

In accordance with one or more embodiments, the distance D4 may be smaller than the $e^{-2}$ intensity width of the fundamental free space mode in the region of the resonator walls (*i.e.,* smaller than the so-called "free space requirement") such that the modes in the narrow axis (*i.e.,* y-axis) are waveguide in nature. For example, in accordance with one or more embodiments, D4 may range between 1 mm and 4 mm, although smaller and larger values of D4 may be used without departing from the scope of the present disclosure. One or more embodiments may employ a so-called hybrid resonator configuration where waveguide propagation occurs in the y-direction and free space propagation occurs in the x-direction. In accordance with one or more embodiments, the distance D4 may be chosen to allow free space propagation (not shown) of the intra-cavity laser beam 211 in the narrow axis of the slab structure (the y-axis, *i.e.,* the axis that is parallel to the gap).

In embodiments that employ a hybrid configuration the output laser transverse beam profile 700 (the cross section of the output beam in the x-y plane) may be elliptical and/or astigmatic, *e.g.,* the size of the beam in the y-direction may be larger than the size of the beam in the x-direction (ellipticity) and/or the position of the waist of the beam in the y-direction is different from the position of the waist in the x-direction (astigmatism). To improve the properties of the output beam profile, waveguide beam conditioning may be employed in accordance with one or more embodiments of the invention as described in more detail above in reference to FIGs. 1-5.

Returning to FIG. 7, the transverse size of the beam within the resonator is determined by the separation between the waveguiding resonator walls 703 and 705. For example, in the transverse y-direction, a beam waist of the intra-cavity beam 711 occurs at both ends of the waveguide and is determined by the bore size D4. In FIG. 2, the radius of the beam in the y-direction at the beam waist is $w_2$. In the free space transverse direction, x-direction (pointing out of the page), the beam 711 is formed as a fundamental mode of the stable resonator with beam radius $w_1$ at the location of the beam waist, which occurs at the surface of the output coupling mirror 707 in embodiments that employ a planar output coupling mirror.

In accordance with one or more embodiments, for a properly chosen gap width D4, the intensity profile of the output beam in the waveguide direction can be made Gaussian-like, as in the free space direction. For example, the fundamental mode in the waveguide direction in rectangular symmetry may be approximated by a Gaussian beam with a waist of $w_2 \approx 0.7a$, where $2a$ is equal to the gap width D4. Thus, in accordance with one or more embodiments, for a given free space waist $w_1$ occurring at the end of the waveguide, D4 may be chosen to satisfy $w_2 \approx 0.7(D4/2)$. However, other widths may be used without departing from the scope of the present disclosure. In accordance with one or more embodiments, the waveguide beam conditioning systems and methods may be used to improve the beam quality of any of the lasers manufactured by Synrad, Inc. In other embodiments, the waveguide beam conditioning systems may be employed to condition the output beams of $CO_2$ lasers that employ all-ceramic laser tubes, such as those manufactured by Iradion Laser, Inc. The examples of laser architectures discussed above are meant merely as examples and the waveguide beam conditioning systems and methods disclosed herein may be employed with any type of laser architecture without departing from the scope of the present disclosure.

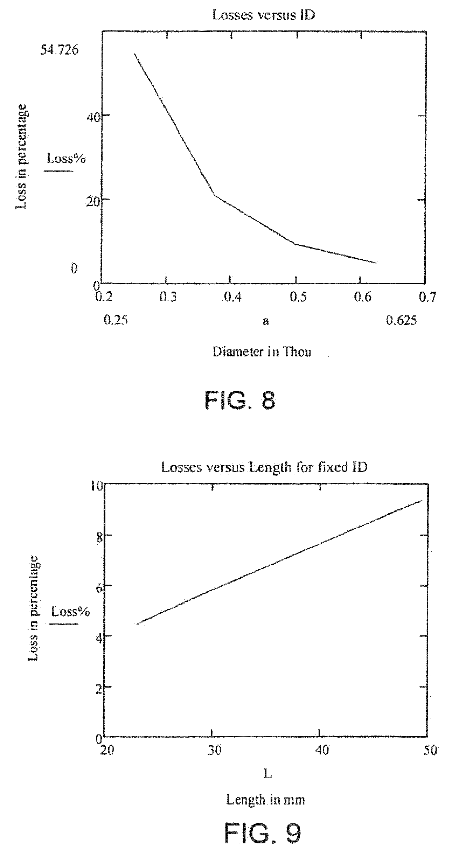

As discussed above, the single-body waveguide aperture and multi-body waveguide aperture may include a single-piece or multi-piece body that is formed from any generally opaque material, *e.g.,* the waveguide aperture may be formed from $Al_2O_3$, BeO, copper, aluminum or any other material that is opaque at the wavelength of interest, *e.g.,* at 9-10 $\mu$m. Thus, the operation of the waveguide aperture may be contrasted with the operation of a traditional fiber optic that has a largely transparent core and cladding material. In a traditional fiber optic, the spatial extent of the transverse mode is large enough that it extends well into the transparent cladding material. To the contrary, in accordance with one or more embodiments of the waveguide aperture disclosed herein, the light will not substantially extend into the waveguide body due to the opacity of the material. For example, in the case of a copper or aluminum body, the opacity of the material is driven largely by the conductivity of the material with the optical field extending only a negligible amount into the copper itself, due primarily to skin depth effects. Thus, in accordance with one or more embodiments, the inner surface of the bore provides for a highly-multi-mode waveguiding effect without the use of a traditional transparent cladding. Such a device differs in behavior from a typical optical fiber formed from a transparent material in that the optical loss of the waveguide aperture decreases as the diameter of the inner bore increases as shown in FIG. 8. In addition, FIG. 9 shows a plot of optical loss at a wavelength of 10.6 microns versus overall length of a waveguide aperture in accordance with one or more embodiments of the invention. In both of these plots, the loss percentage is defined to be the output power from the output port divided by the input power at the input port.

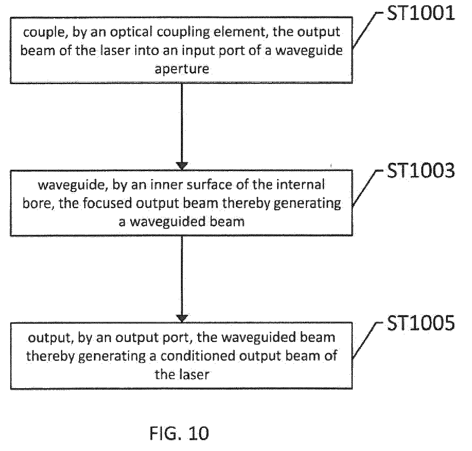

FIG. 10 shows a flow chart of a method for conditioning an output beam of a laser in accordance with one or more embodiments. The output beam that is to be conditioned may be any type of laser beam. For example, in the field of laser manufacturing, cutting, welding, etc., a high power infra-red laser beam (continuous wave or pulsed) may generated by a gas discharge laser, solid state laser, or the like. Such a beam may suffer from a number of optical aberrations and may benefit from further beam conditioning. Further examples of lasers that may be used to generate the output beam are described above in reference to FIGs. 5-7 but any laser may be used without departing from the scope of the present disclosure. In Step 1001, the output beam is coupled into an input port of a waveguide aperture.

In accordance with one or more embodiments, the raw output of a laser beam may be coupled directly into the input port of the waveguide aperture. In other examples, the raw output beam of the laser may be coupled using an optical coupling element, *e.g.*, one or more focusing elements such as lenses. In accordance with one or more embodiments, the optical waveguide aperture may be any of the aforementioned waveguide apertures, *e.g.*, as described in reference to FIGs. 1-5 above. Thus, the waveguide aperture may include an input port section having the input port that receives the focused output beam to be conditioned. The waveguide aperture further includes an elongated waveguide body formed from an opaque material and having internal bore formed therethrough.

In Step 1003, the focused output beam is waveguided by an inner surface of the internal bore, thereby generating a waveguided beam. During propagation of the waveguided beam, the various aberrations of the input beam are largely corrected because the waveguided beam takes the physical characteristics of the waveguide aperture modes, both with respect to phase and shape of the spatial mode. In Step, 1005, the waveguided beam is output by an output port, thereby generating a conditioned output beam of the laser.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

For example, the embodiments described above may be combined with each other in different combinations. Also, mutually non-exclusive features of the embodiments described above can be combined with each other according to various combinations, which are neither limited to the specific combinations disclosed herein nor limited to the claim structure or claim dependencies.

**Claims**

1. A laser comprising:

    a first electrode comprising a first electrode inner surface;
    a second electrode comprising a second electrode inner surface,
    wherein the first electrode is separated, in a first transverse direction, from the second electrode thereby defining a gap region having a gap thickness between the first electrode inner surface and the second electrode inner surface;
    wherein a discharge region is disposed within a central portion of the gap region;
    a lasing medium disposed within the discharge region;
    wherein the discharge region is disposed within an optical cavity;
    an output port for allowing an output beam of the laser to exit the optical cavity; and
    a waveguide aperture, the waveguide aperture comprising:

        an input port section comprising the input port that receives the output beam;
        an elongated waveguide body having internal bore formed therethrough, wherein a transverse width of the internal bore is small enough to cause the output beam to be waveguided by the internal bore;
        an output port that receives the waveguided beam and outputs a conditioned output beam of the laser.

2. The laser of claim 1, wherein the input port section and the elongated waveguide body form an integrated unit.

3. The laser of claim 2, wherein the integrated unit is formed from a metallic material.

4. The laser of claim 2, wherein the integrated unit is formed from a ceramic material.

5. The laser of claim 1, wherein the input port section is formed from a metallic material and the elongated waveguide body is formed from a ceramic material.

6. The laser of claim 1, wherein the relationship between the transverse width $a$ of the internal bore and the length of the elongated waveguide body L satisfies the relationship $1 \leq a^2/L\lambda$, where $\lambda$ is the wavelength of the output beam.

7. A beam conditioning apparatus for conditioning an output beam of a laser, the beam conditioning apparatus comprising:

    an optical coupling element that couples the output beam of the laser into an input port of a waveguide aperture;

and
the waveguide aperture comprising:

    an input port section comprising the input port that receives the focused output beam;
    an elongated waveguide body formed from an opaque material and having an internal bore formed therethrough, wherein an inner surface of the internal bore forms a waveguide for the focused output beam and thereby generates a waveguided beam;
    an output port that receives the waveguided beam and outputs a conditioned output beam of the laser.

8. The beam conditioning apparatus of claim 7, wherein the input port section and the elongated waveguide body form an integrated unit.

9. The beam conditioning apparatus of claim 8, wherein the integrated unit is formed from a metallic material.

10. The beam conditioning apparatus of claim 8, wherein the integrated unit is formed from a ceramic material.

11. The beam conditioning apparatus of claim 7, wherein the input port section is formed from a metallic material and the elongated waveguide body is formed from a ceramic material.

12. The beam conditioning apparatus of claim 7, wherein the relationship between the transverse width $a$ of the internal bore and the length of the elongated waveguide body $L$ satisfies the relationship $1 \leq a^2/L\lambda$, where $\lambda$ is the wavelength of the output beam.

13. A waveguide aperture beam conditioner comprising:

    an input port section comprising a input port that receives an aberrated laser beam;
    an elongated waveguide body formed from an opaque material and having internal bore formed therethrough, wherein an inner surface of the internal bore forms a waveguide for the focused output beam and thereby generates a waveguided beam; and
    an output port that receives the waveguided beam and outputs a conditioned output laser beam.

14. The waveguide aperture of claim 13, wherein a relationship between the transverse width $a$ of the internal bore and a length of the elongated waveguide body $L$ causes an EH11 mode and an EH12 mode of the waveguide aperture to be substantially in-phase at the output port.

15. The waveguide aperture of claim 13, wherein a relationship between the transverse width $a$ of the internal bore and a length of the elongated waveguide body $L$ causes an EH11 mode and an EH12 mode of the waveguide aperture to be out of phase such that the output is one of annular, donut shaped, or quasi flat-topped.

16. The waveguide aperture of claim 13, wherein a relationship between the transverse width $a$ of the internal bore and a length of the elongated waveguide body $L$ causes an EH11 mode and an EH12 mode of the waveguide aperture to be out of phase such that the output is one of annular, donut shaped, or quasi flat-topped.

17. The waveguide aperture of claim 16, wherein a relationship between the transverse width $a$ of the internal bore and a length of the elongated waveguide body $L$ causes a higher order EHNM mode (where N and M are greater than 1) of the waveguide aperture to be out of phase such that the output is one of annular, donut shaped, or quasi flat-topped.

18. The beam conditioning apparatus of claim 13, wherein the input port section and the elongated waveguide body form an integrated unit.

19. The beam conditioning apparatus of claim 15, wherein the integrated unit is formed from a metallic material.

20. The beam conditioning apparatus of claim 15, wherein the integrated unit is formed from a ceramic material.

21. The beam conditioning apparatus of claim 13, wherein the input port section is formed from a metallic material and the elongated waveguide body is formed from a ceramic material.

22. A method for conditioning an output beam of a laser, the method comprising:

coupling the output beam of the laser into an input port of a waveguide aperture, the waveguide aperture comprising:

an input port section comprising the input port that receives the focused output beam;
an elongated waveguide body formed from an opaque material and having internal bore formed therethrough,

waveguiding, by an inner surface of the internal bore, the focused output beam thereby generating a waveguided beam; and
outputting, by an output port, the waveguided beam thereby generating a conditioned output beam of the laser.

23. The waveguide aperture of claim 13, further comprising: an optical coupling element that couples the output beam of the laser into an input port of a waveguide aperture.

24. The laser of claim 1, further comprising: an optical coupling element that couples the output beam of the laser into the input port of the waveguide aperture.

FIG. 1

FIG. 2

311a — 305a
311b — 305b
311c — 305c
311d — 305d

FIG. 3A    FIG. 3B    FIG. 3C    FIG. 3D

FIG. 4

EP 3 096 419 A1

FIG. 5A

FIG. 5B

FIG. 5C

505

503

FIG. 6A

FIG. 6B

FIG. 7

Losses versus ID

FIG. 8

Losses versus Length for fixed ID

FIG. 9

couple, by an optical coupling element, the output beam of the laser into an input port of a waveguide aperture — ST1001

waveguide, by an inner surface of the internal bore, the focused output beam thereby generating a waveguided beam — ST1003

output, by an output port, the waveguided beam thereby generating a conditioned output beam of the laser — ST1005

FIG. 10

Europäisches
Patentamt

European
Patent Office

Office européen
des brevets

## EUROPEAN SEARCH REPORT

Application Number

EP 16 16 8655

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHOU J Y ET AL: "GAUSSIAN PROFILE FILTER AND REFLECTOR EMPLOYING CAPILLARY AND LENS", APPLIED OPTICS, OPTICAL SOCIETY OF AMERICA, WASHINGTON, DC; US, vol. 29, no. 24, 20 August 1990 (1990-08-20), pages 3463-3464, XP000141093, ISSN: 0003-6935, DOI: 10.1364/AO.29.003463 * last paragraph; figures 1,2 * | 1-24 | INV. H01S3/00 B23K26/073 F21V8/00 G02B27/09 G02B6/14 |
| X | EP 2 615 486 A1 (IREPA LASER [FR]) 17 July 2013 (2013-07-17) * abstract; figure 4c * | 1-24 | |
| X | WO 88/00108 A1 (KOMATSU MFG CO LTD [JP]) 14 January 1988 (1988-01-14) * abstract; figure 1 * | 1-24 | |
| X | US 2007/211995 A1 (CHRISTENSEN SCOTT E [US] ET AL) 13 September 2007 (2007-09-13) * abstract; figures 3,5 * | 1-24 | |
| | | | TECHNICAL FIELDS SEARCHED (IPC) |
| | | | H01S B23K G02B |

The present search report has been drawn up for all claims

| Place of search | Date of completion of the search | Examiner |
|---|---|---|
| Munich | 11 October 2016 | Lendroit, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 16 8655

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2016

| Patent document cited in search report | | Publication date | Patent family member(s) | | Publication date |
|---|---|---|---|---|---|
| EP 2615486 | A1 | 17-07-2013 | EP | 2615486 A1 | 17-07-2013 |
| | | | FR | 2985579 A1 | 12-07-2013 |
| | | | US | 2013194673 A1 | 01-08-2013 |
| WO 8800108 | A1 | 14-01-1988 | DE | 3787463 D1 | 21-10-1993 |
| | | | DE | 3787463 T2 | 28-04-1994 |
| | | | EP | 0282593 A1 | 21-09-1988 |
| | | | WO | 8800108 A1 | 14-01-1988 |
| US 2007211995 | A1 | 13-09-2007 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6603794 B